# EUROPÄISCHE PATENTANMELDUNG

(11) **EP 1 439 461 A1**
(43) Veröffentlichungstag der Anmeldung: **21.07.2004**
(21) Anmeldenummer: 03000831.2
(22) Anmeldetag: 15.01.2003
(51) Int. Cl.: G06F 9/40

(54) **Datenverarbeitungsanlage**

(71) Anmelder: Drea-Multimedia-TV GmbH, 44536 Lünen (DE)
(72) Erfinder: Leuering, Jürgen, 48431 Rheine (DE); Ziemann, Tim, 44339 Dortmund (DE); Glunz, Dirk, 26409 Wittmund (DE)
(74) Vertreter: Stenger, Watzke & Ring Patentanwälte

(57) **Zusammenfassung**

Die Erfindung betrifft eine Computereinrichtung, insbesondere für den Empfang von Satelliten, Kabel- und/oder terrestrischen Signalen. Um eine Computereinrichtung bereitstellen zu können, die geeignet ist, an verschiedenartige Ein- und Ausgabegeräte angeschlossen zu werden und die eine uneingeschränkte Einflußnahme auf Signalempfang, Signalverarbeitung und Signalwiedergabe ermöglicht, wird mit der Erfindung vorgeschlagen eine Computereinrichtung, beinhaltend eine wenigstens aus CPU, Speicher, Schnittstellen für Cl, Smartcard und/oder Flashcard sowie Laufwerkscontroller bestehende Computereinheit, eine Bedien- und Anzeigeneinheit sowie einen Signaltuner, wobei die Computereinheit mit einem im Open Source vorliegende Betriebssystem betrieben ist und die Software für die Schnittstellen und die CPU in gespeicherter Form als Microcode vorliegt.

## Beschreibung

Die vorliegende Erfindung betrifft eine Computereinrichtung, insbesondere für den Empfang von Satelliten-, Kabel- und/oder terrestrischen Signalen.

Computereinrichtungen als solche sind aus dem Stand der Technik hinlänglich bekannt. Beispielsweise dienen sie als Personal Computer unter anderem der Text- und Zeichnungsverarbeitung, der Speicherung und Verarbeitung von Daten in Datenbanken, der Verwendung als Spiele-Konsole oder dergleichen. Auch ist es aus dem Stand der Technik bekannt, Computer mit Video- oder TV-Karten zu bestücken, um so in digitaler Form vorliegende Video- oder TV-Signale empfangen und zur Anzeige auf dem Computermonitor verarbeiten zu können. Ferner können die aus dem Stand der Technik bekannten Computereinrichtungen dazu genutzt werden, digital vorliegende Audioformate zu speichern, abzuspielen und ggf. auch unter Verwendung entsprechender Software zu manipulieren.

Bekannt sind aus dem Stand der Technik des weiteren Empfangsvorrichtungen beispielsweise in Form von Sat-Receivern für das Empfangen von Radio- oder Fernsehsignalen. Abgestimmt auf das jeweils von der Empfangsvorrichtung zu empfangende Signal ist diese mit einer entsprechenden Elektronik versehen, so daß das empfangene Signal verarbeitet und an das an die Empfangsvorrichtung angeschlossene Ausgabegerät weitergegeben werden kann. Empfangsvorrichtung und Ausgabegerät sind dabei aufeinander abgestimmt, so daß das von der Vorrichtung empfangene Signal in Bezug auf das angeschlossene Ausgabegerät optimiert verarbeitet werden kann. Als Beispielanwendungen seien in diesem Zusammenhang Sat-Receiver, Signaltuner oder dergleichen genannt.

Mit Nachteil können die vorgenannten Empfangsvorrichtungen jedoch nur an solche Ausgabegeräte angeschlossen werden, die zur Schnittstelle bzw. Elektronik der Vorrichtung kompatibel sind. Verbraucherseitig sind daher in Abhängigkeit des zu empfangenden, weiterzuverarbeitenden Signals bzw. in Abhängigkeit des jeweiligen Ausgabegerätes unterschiedliche Empfangsvorrichtungen vorzusehen. So kann beispielsweise ein herkömmlicher Sat-Receiver nicht dazu verwandt werden, analoge Radiosignale über Antenne zu empfangen und weiterzuverarbeiten. Der Verbraucher ist daher gezwungen, in Abstimmung der von ihm wunschgemäß zu empfangenden Signale und der zur Ausgabe dieser Signale erforderlichen Ausgabegeräte entsprechend kompatible Empfangsvorrichtungen bereitzustellen und für eine Signalübertragung entsprechend anzuschließen, wobei die Vielzahl der empfangbaren Signale und die unterschiedlichsten Möglichkeiten der Ausgabe dazu führen, daß verbraucherseitig eine Mehrzahl von unabhängig voneinander arbeitenden Empfangsvorrichtungen vorzusehen ist. Dies ist nicht nur kostspielig, auch ist natürlich der Bedienkomfort entsprechend eingeschränkt.

Ausgehend von diesem Stand der Technik ist es daher **Aufgabe** der Erfindung, unter Vermeidung der vorgenannten Nachteile eine Computereinrichtung für den Empfang von Signalen bereitzustellen, die geeignet ist, an verschiedenartige Ein- und Ausgabegeräte angeschlossen zu werden und die eine uneingeschränkte Einflußnahme auf Signalempfang, Signalverarbeitung und Signalwiedergabe ermöglicht.

Zur **Lösung** dieser Aufgabe wird mit der Erfindung vorgeschlagen eine Computereinrichtung, insbesondere für den Empfang von Satelliten-, Kabelund/oder terrestrischen Signalen, beinhaltend eine wenigstens aus CPU, Speicher, Schnittstellen für Cl, Smartcard und/oder Flashcard sowie Laufwerkscontroller bestehende Computereinheit, eine Bedien- und Anzeigeneinheit sowie einen Signaltuner, wobei die Computereinheit mit einem im Open Source vorliegenden Betriebssystem betrieben ist und die Steuersoftware für die Schnittstellen und die CPU in gespeicherter Form als Microcode vorliegt.

Die Verbindung einer Computereinheit und eines Signaltuners zu einer gemeinsamen Computereinrichtung bzw. Empfangsvorrichtung eröffnet in vorteilhafter Weise die Möglichkeit, die Computereinrichtung bzw. Empfangsvorrichtung frei zu programmieren und so individuell sowohl auf das zu empfangende Signal als auch auf das an die Computereinrichtung bzw. Empfangsvorrichtung angeschlossene Ausgabegerät einzustellen. Ein und dieselbe Computereinrichtung bzw. Empfangsvorrichtung kann somit dazu verwendet werden, unterschiedlichste Signalarten in unterschiedlichsten Signalformen zu empfangen, zu verarbeiten und an ein beliebig an die Computereinrichtung bzw. Empfangsvorrichtung anschließbares Ausgabegerät zur Wahrnehmung durch den Anwender zu übertragen.

Die vollwertig in der erfindungsgemäßen Computereinrichtung enthaltene Computereinheit wird mit einem im Open Source vorliegenden Betriebssystem, beispielsweise Linux, betrieben, so daß nicht nur die freie Programmierbarkeit gewährleistet ist, auch steht es natürlich jedem Anwender selbst frei, eigene Einstellungen vornehmen zu können. Die Computereinheit dient dabei als vollwertiger PC, so daß in herkömmlicher Weise beispielsweise über Tastatur und/oder Maus programmiertechnische Eingaben vom Verbraucher vorgenommen werden können. Die Steuersoftware (Treiber) für die Schnittstellen als auch für die CPU, die sogenannte Central Processing Unit, liegen in gespeicherter Form vorzugsweise als Microcode vor und können vom Verbraucher bedarfsgerecht in die Computereinrichtung entweder übernommen oder als bereits schon implementierte und innerhalb der Vorrichtung gespeicherte Software aufgerufen werden.

Mit der erfindungsgemäßen Computereinrichtung wird es erstmalig möglich, nur ein einziges Gerät für den Empfang, die Verarbeitung und die Weitergabe von Signalen vorzusehen, das durch seine freie Programmierbarkeit in keinster Weise auf die Verarbeitung bestimmter Signale beschränkt ist, sondern vielmehr die Möglichkeit eröffnet, wahlweise das jeweils vom Verbraucher gewünschte Signal zu empfangen und umzusetzen. Die Einsatzmöglichkeiten der erfindungsgemäßen Computereinrichtung sind Dank der durch die Computereinheit ermöglichten freien Programmierbarkeit in Kombination mit der vielseitigen Anschlußmöglichkeit unterschiedlichster Ausgabegeräte nahezu unbegrenzt. So kann die erfindungsgemäße Computereinrichtung beispielsweise dazu genutzt werden, Fernseher, DVD-Player und Soundanlage miteinander zu kombinieren, so daß der Verbraucher mittels nur eines einzigen Gerätes eine Verknüpfung und Steuerung einzelner Baukomponenten seines "Heim-Kinos" vornehmen kann. Auch kann die Computereinrichtung beispielsweise dazu verwandt werden, als digitales Fotolabor zu dienen. Digitalisierte oder direkt aus einer digitalen Kamera stammende Fotografien können über eine der diversen Schnittstellen in den Speicher der Computereinheit der Computereinrichtung übertragen werden. Unter Verwendung entsprechender Software können die so überspielten digitalen Fotos verarbeitet und für die Ausgabe an einen Monitor oder an einen Fernseher entsprechend aufbereitet werden. Der Anwender hat so die Möglichkeit, beispielsweise im Rahmen einer Slide-Show die von ihm angefertigten digitalen Fotos über ein entsprechendes Ausgabegerät wie beispielsweise den Fernseher einem Publikum seiner Wahl auf einfache Weise zugänglich zu machen. Kombiniert werden kann eine solche Slide-Show mit musikalischer Untermalung, deren Steuerung gleichfalls durch die erfindungsgemäße Computereinrichtung übernommen werden kann.

Weitere Anwendungsbeispiels für die erfindungsgemäße Computereinrichtung sind der Empfang von Fernseh- und Audiosignale in digitaler wie auch in analoger Form sowohl über Satellit, Kabel oder Antenne. Die empfangenen Signale können entsprechend der vom Anwender vorgenommenen Programmierung der Vorrichtung verarbeitet und für eine Wiedergabe durch ein entsprechendes Ausgabegerät umgesetzt werden. Von besonderem Vorteil ist hierbei, daß der Anwender eine Reihe unterschiedlicher Anwendungsprofile speichern und jederzeit bedarfsgerecht abrufen kann. Somit ist ihm die Möglichkeit gegeben, die erfindungsgemäße Computereinrichtung durch einfachen Aufruf des jeweiligen Programmprofils für den Empfang und die Weiterverarbeitung eines entsprechenden Signals umzustellen. Vorzugsweise wird dies mittels einer Fernbedienung ermöglicht, so daß der Anwender in der Praxis keine zeitraubende und umständliche Umprogrammierung vornehmen muß. Statt dessen kann er auf Knopfdruck umschalten und die erfindungsgemäße Computereinrichtung wechselt automatisch auf das von ihm wunschgemäß angewählte Programmprofil um, was in der Konsequenz den Empfang, die Verarbeitung und die Ausgabe des vom Anwender gewünschten Signals ermöglicht. Der Anwender kann so auf einfache Weise zwischen unterschiedlichen Programmprofilen und somit zwischen unterschiedlichen Signalempfängen und Signalausgaben hin und her wechseln.

Für eine visuelle Kontrolle der vom Anwender jeweils ausgewählten Einstellung für die erfindungsgemäße Computereinrichtung verfügt diese über eine entsprechende Anzeigeneinheit. Diese ermöglicht es dem Anwender, auf einfache Weise zu erkennen, welche Einstellungen er beispielsweise vorgenommen hat, welches Signal momentan empfangen wird und auf welche Schnittstelle dieses Signal gegeben wird. Als Anzeigeneinheit kann beispielsweise ein Display in Form eines LC-Displays, eines EL-Displays oder eines OEL-Displays verwendet werden.

Vorzugsweise verfügt die erfindungsgemäße Computereinrichtung über eine Einrichtung zur Entschlüsselung verschlüsselter Signale, einem sogenannten descrambler. Dieser descrambler sorgt dafür, daß eingehende Signale, die nach einem bestimmten System oder einem bestimmten Code verschlüsselt sind, dem Grunde nach entschlüsselt werden können. Für eine tatsächliche Durchführung einer Entschlüsselung bedarf es einer entsprechenden Entschlüsselungssoftware und eines Schlüssels beispielsweise in Form einer Smart- oder Flashcard, die in Kombination mit dem descrambler eine bedarfsgerechte Entschlüsselung ermöglichen. Vorzugsweise läßt sich der descrambler unter Verwendung entsprechenden Spezialwerkzeuges aktivieren bzw. deaktivieren, wobei eine Entschlüsselung nur bei aktiviertem descrambler überhaupt möglich ist. Die Kombination von descrambler, Entschlüsselungssoftware und Schlüssel ermöglicht die Entschlüsselung verschlüsselter Signale, wie sie beispielsweise aus dem Bereich des Pay-TV bekannt sind. Herstellerseitig wird der descrambler vorzugsweise deaktiviert in die erfindungsgemäße Computereinrichtung eingesetzt, so daß es für eine Verwendung des descramblers seitens des Verbrauchers zunächst einer autorisierten Freischaltung bedarf.

Die Computereinheit der erfindungsgemäßen Computereinrichtung verfügt über Schnittstellen für Cl, Smartcard und/oder Flashcard. Bei der Schnittstelle für Cl handelt es sich um das sogenannte Common Interface, das eine standardisierte Schnittstelle im PCMCIA Typ 11 - Format darstellt. Anwenderseitig besteht über diese Schnittstelle die Möglichkeit, nachträgliche Erweiterungen, wie beispielsweise in Bezug auf Hauptspeicher, Software, Modem oder dergleichen auf einfache Weise vornehmen zu können. Auch kann ein update des Betriebssystems über diese Schnittstelle auf einfache Weise vorgenommen werden. Die Schnittstellen für Smartcard und Flashcard erlauben es dem Anwender, vorprogrammierte Chipeinheiten mit der erfindungsgemäßen Computereinrichtung zu kombinieren, wodurch die Möglichkeiten der Verwendbarkeit der Computereinrichtung in vorteilhafter Weise erweitert werden können. So können beispielsweise Smartcards als digitale Schlüssel ausgebildet sein, und nach einem Einbringen in die erfindungsgemäße Computereinrichtung in Verbindung mit einem descrambler und einer entsprechenden Entschlüsselungssoftware als Decodiermittel für die Entschlüsselung verschlüsselter Signale dienen. Die von der Computereinrichtung empfangenen verschlüsselten Signale können dann entschlüsselt und zur Anzeige auf einem entsprechenden Ausgabegerät, beispielsweise Fernseher und/oder Sound-Anlage, entsprechend verarbeitet werden.

Erfindungsgemäß verfügt die Computereinrichtung zudem über einen Laufwerkscontroller, über den auf an die Vorrichtung anschließbare Laufwerke zugegriffen werden kann. Dem Anwender steht somit die Möglichkeit offen, Software über externe Laufwerke in die Computereinrichtung einzuspeisen und so für eine Verarbeitung innerhalb der Computereinheit bereitzustellen. Für die Speicherung interner Daten verfügt die Vorrichtung zudem über einen entsprechenden Speicher.

Betrieben wird die Computereinheit mit einem im Open Source vorliegenden Betriebssystem. Hierdurch wird nicht nur eine programmiertechnische Unabhängigkeit von der verwendeten Hardware erreicht, auch kann der Anwender sehr flexibel eine von ihm gewünschte programmtechnische Ansteuerung der angeschlossenen Geräte vorsehen. Dies ist dabei insofern von Vorteil, als daß Anbieter bestimmter Hardwarekomponenten eigene Steuerungssoftware für den Anwender mit zur Verfügung stellen können, die dann unabhängig vom jeweils individuell vom Anwender betriebenen System in einfacher Weise angepaßt und in das beim Anwender bestehende System implementiert werden können. Die erfindungsgemäße Computereinrichtung kann so ständig erweitert und auf die Bedürfnisse des Anwenders speziell eingerichtet werden.

Mit der erfindungsgemäßen Empfangsvorrichtung wird erstmals eine Hardwarekomponente zur Verfügung gestellt, die vollständig unabhängig ist sowohl von den wunschgemäß vom Anwender zu empfangenden Signalen als auch von den für die Ausgabe dieser empfangenen Signale erforderlichen Ausgabegeräte. Die erfindungsgemäße Computereinrichtung ist frei programmierbar und kann so individuell auf die anwenderseitig gewünschte Konfiguration angepaßt werden. Dies ermöglicht ein breites Anwendungsspektrum, so daß ein und dieselbe Vorrichtung für den parallelen Einsatz unterschiedlicher Anwendungsfälle gleichsam vom Anwender genutzt werden kann.

Gemäß einem weiteren Merkmal der Erfindung weist die Computereinrichtung eine Ethernet- und/oder eine USB- und/oder eine RS232-Schnittstelle auf. Bei diesen Schnittstellen handelt es sich um Standardschnittstellen, die dem zusätzlichen Anschluß weiterer Peripheriegeräte dienen.

Zudem weist die erfindungsgemäße Computereinrichtung vorzugsweise wenigstens einen digitalen Audio- und/oder TV- und/oder VCR-Anschluß auf. Somit kann die Vorrichtung in vorteilhafter Weise an ein Soundsystem, einen Fernseher und/oder einen Videorecorder bzw. ein DVD-Gerät oder dergleichen angeschlossen werden. Der Anwender hat somit die Möglichkeit, unter Nutzung der erfindungsgemäßen Computereinrichtung ein multifunktionales Home-Kino aufzubauen und dieses bedarfsgerecht nach dem Baukastensystem zu erweitern. Die Computereinrichtung stellt dabei die zentrale Steuereinheit dar und ermöglicht es dem Anwender, die einzelnen Endgeräte seines Home-Kinos individuell anzusteuern und im Verbund eine vielseitig verwendbare Gerätekombination zu schaffen.

Gemäß einem weiteren Merkmal der Erfindung weist die Computereinrichtung eine Sendediode, vorzugsweise eine Infrarotsendediode auf. Die Sendediode hat dabei die Aufgabe, von der Empfangsvorrichtung ausgehende Signale in Form von Infrarotlicht auszugeben und schnurlos an angeschlossene Peripheriegeräte zu übertragen.

Vorzugsweise verfügt die erfindungsgemäße Computereinrichtung zudem über ein l²C-Interface. Bei diesem Interface, dem sogenannten Inter-Integrated-Circuit, handelt es sich um eine synchrone serielle 2-Drahtverbindung zwischen einem Master und einer beliebigen Anzahl an Slaves. Auf einer der Leitungen wird ein Takt übertragen, wohingegen die andere Leitung der Datenübertragung dient. Die Daten können dabei sowohl vom Controller zum Slave als auch vom Slave zum Controller übertragen werden, wobei der Übertragungstakt vom Master vorgegeben wird. Über das l²C-Interface lassen sich in vorteilhafter Weise eine Reihe unterschiedlicher Slaves an die erfindungsgemäße Empfangsvorrichtung anschließen, womit sich diese durch Anschluß unterschiedlicher Peripheriegeräte individuell an die vom Anwender gewünschte Konfiguration anpassen läßt.

Vorzugsweise verfügt die erfindungsgemäße Vorrichtung des weiteren über einen Internetanschluß. Über die erfindungsgemäße Computereinrichtung kann so das Internet als solches genutzt werden und der Anwender hat beispielsweise die Möglichkeit, die für eine spezielle Verwendung der Computereinrichtung benötigte Software vom Hersteller oder Anbieter direkt über das Internet an die Computereinrichtung zu übertragen und dort zu installieren. Die Computereinrichtung kann zudem beispielsweise dazu verwendet werden, das über das Internet in die Computereinrichtung eingespeiste Signal für eine Anzeige auf einem Fernseher umzusetzen. Der Anwender braucht dann nicht mehr einen Internetcomputer. Statt dessen kann der Anwender sämtliche Funktionen, die das Internet bietet, auch über die erfindungsgemäße Computereinrichtung in Anspruch nehmen und steuern, wobei eine Steuerung auch über die Fernbedienung der Computereinrichtung erfolgen kann. Insoweit dient die erfindungsgemäße Computereinrichtung als multifunktionale Einrichtung, die dem Anwender in vorteilhafter Weise die Verwendung nur eines Gerätes gestattet, wobei dieses eine Gerät sämtliche vom Anwender gewünschte Funktionen umsetzen und erfüllen kann.

## Patentansprüche

1. Computereinrichtung, insbesondere für den Empfang von Satelliten-, Kabel- und/oder terrestrischen Signalen, beinhaltend eine wenigstens aus CPU, Speicher, Schnittstellen für Cl, Smartcard und/oder Flashcard sowie Laufwerkscontroller bestehende Computereinheit, eine Bedien- und Anzeigeneinheit sowie einen Signaltuner, wobei die Computereinheit mit einem im Open Source vorliegenden Betriebssystem betrieben ist und die Steuersoftware für die Schnittstellen und die CPU in gespeicherter Form als Microcode vorliegt.

2. Computereinrichtung nach Anspruch 1, **dadurch gekennzeichnet, daß** diese eine Ehternet- und/oder eine USB- und/oder eine RS232-Schnittstelle aufweist.

3. Computereinrichtung nach einem der Ansprüche 1 oder 2, **dadurch gekennzeichnet, daß** diese wenigstens einen digitalen Audio- und/oder TVund/oder VCR-Anschluß aufweist.

4. Computereinrichtung nach einem der vorhergehenden Ansprüche, **dadurch gekennzeichnet, daß** diese einen Internetanschluß aufweist.

5. Computereinrichtung nach einem der vorhergehenden Ansprüche, **dadurch gekennzeichnet, daß** diese einen l²C-Bus aufweist.

6. Computereinrichtung nach einem der vorhergehenden Ansprüche, **dadurch gekennzeichnet, daß** diese eine Sendediode, vorzugsweise eine Infrarotsendediode, aufweist.

7. Computereinrichtung nach einem der vorhergehenden Ansprüche, **dadurch gekennzeichnet, daß** diese einen Festplatten-Controller aufweist.

8. Computereinrichtung nach einem der vorhergehenden Ansprüche, **dadurch gekennzeichnet, daß** diese einen descrambler aufweist.
